# EUROPEAN PATENT SPECIFICATION

(11) **EP 2 880 370 B1**
(45) Date of publication and mention of the grant of the patent: **02.11.2016**
(21) Application number: 13716478.6
(22) Date of filing: 21.02.2013
(51) Int. Cl.: F16L 41/08, F24F 7/04, F24F 13/02

(54) **PRACTICAL FLEXIBLE CONNECTING APPARATUS FOR VENTILATION DUCT**
PRAKTISCHE FLEXIBLE VERBINDUNGSVORRICHTUNG FÜR LÜFTUNGSKANAL
APPAREIL DE CONNEXION FLEXIBLE PRATIQUE POUR UN CONDUIT DE VENTILATION

(30) Priority: 08.03.2012 TR 201202643
(43) Date of publication of application: 10.06.2015
(73) Proprietor: Isil Mühendislik Makine ve Insaat Sanayi Ve Ticaret Anonim Sirketi, Istanbul (TR)
(72) Inventor: HIKMET, Köse, Istanbul (TR)
(74) Representative: nospat Patent- und Rechtsanwälte GbR
(86) International application number: PCT/TR2013/000065
(87) International publication number: WO 2013/133775

(56) References cited:
- DE-A1- 4 040 495
- US-A- 4 249 758
- US-A- 5 806 830
- US-A1- 2008 093 843

## Description

### Technical Area

The invention is about a connecting apparatus which ensures the connection of the flexible ventilation ducts to the main ventilation ducts, distribution points and all kinds of fans, devices and ventilation equipment, and which, distinctly from the existing connecting apparatuses, is installed by being screwed onto the flexible ventilation duct and thereby where the flexible ventilation duct serves as a natural gasket by being squeezed, and which allows for a more leak-proof, more resistant, more practical, more economic and more flexible connection.

### State of the Art

In the previous technique, generally plastic clamps and insulating tapes are used when connecting the flexible ventilation ducts to the main ducts, certain distribution points, all kinds of fan, device and ventilation equipment. A metal end is fixed on the flexible ventilation duct's section that will be connected to the main ventilation duct, and a plastic clamp is fitted over the joint. After encircling the joint areas with chemicals such as mastic etc. for sealing and further adherence, the duct, end section and the insulating layers around the duct are tried to be fixed to the main ventilation duct with an insulating tape. While this makes the installation time longer, a long-lasting solution cannot be provided. Additionally, failure to configure the plastic clamp and insulating tape appropriately causes the ventilation ducts to have a worse appearance. Elongation of the installation time results in an increase in the labor cost.

Various structures have been tried to be provided to overcome this problem in the previous technique. In the patent no. US5741030 among these, an initial flange with integrated fitting tabs to be fixed on the flat surface of a ventilation duct is mentioned of. While the said flange enables for varying spacing sizes, it can be fixed on rugged sides.

In the patent no US5806830 on the other hand, an apparatus manufactured from one-piece plastic is mentioned of, which is used as connecting flange in joining the main or intermediary ventilation ducts for heating, cooling, waste air and air re-circulation purposes. This apparatus with a tube-like shape has a vertical flange on the first end section, and fastening tabs on the other end section.

In the patent application no. US20080093843 however, a configuration and an apparatus are described where a cylindrical base flange is fixed on the gap generated on the air box walls in a heating, cooling, ventilating and conditioning (HVAC) system, and the connection is performed on the connection tabs generated on this flange by virtue of the fastening tabs generated in hook shape in the inner section of the flexible ventilation pipe. Patent document US4249758A discloses a connecting apparatus according to the preamble of claim 1.

All these improvements and developments in the previous technique could not completely meet the relevant practical, esthetic and economical requirements for the connection of the flexible ventilation ducts. For these reasons, making an improvement in the relevant technical field has become obligatory.

### The Aim and Brief Description of the Invention

The aim of the present invention is to present a connecting apparatus ensuring the practical, esthetical, resistant and economic connection of the flexible ventilation ducts to the main ventilation ducts and boxes, distribution points, all kinds of fans, devices and ventilation equipment.

### Brief Description of the Figures

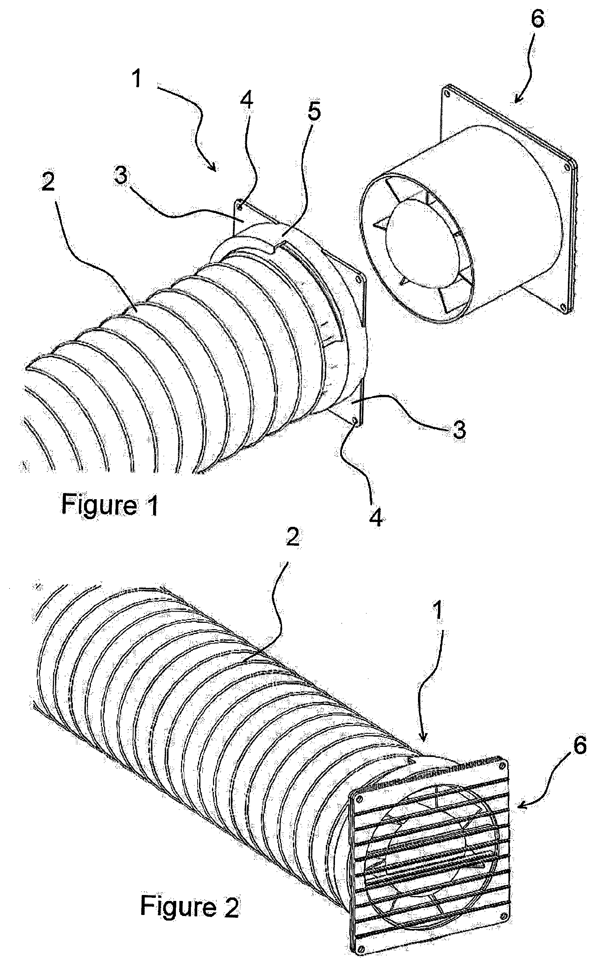

A perspective view is given in Figure 1, showing the installation of the connecting apparatus, which is the subject of the invention, with the flexible ventilation duct.

A perspective view from a different viewpoint is presented in Figure 2, where the connecting apparatus which is the subject of the invention is fixed to a flexible ventilation duct.

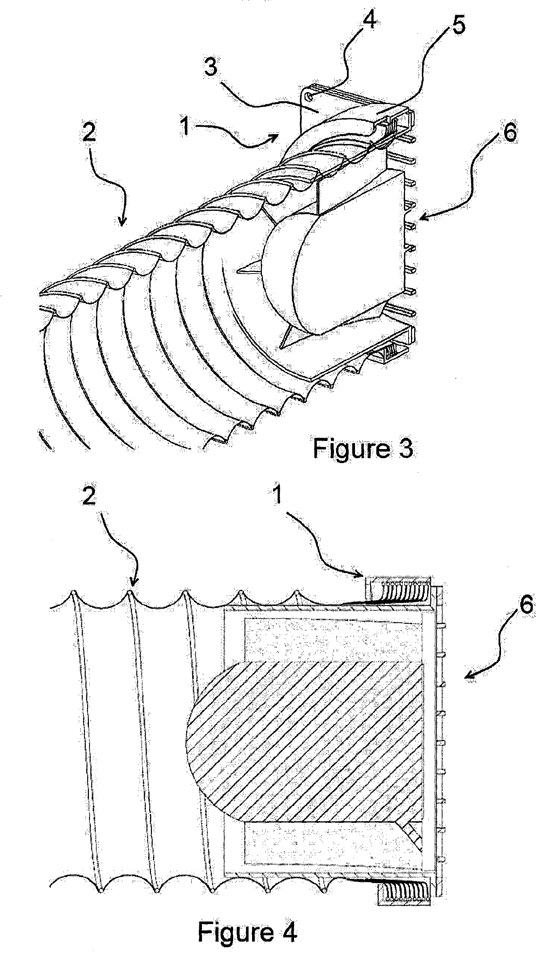

While a perspective cross-section of the connecting apparatus which is the subject of the invention is given in Figure 3, it's two dimensional cross-sectional view is presented in Figure 4.

In Figures 5 and 6, installation of another configuration of the apparatus which is the subject of the invention, and the detailed view of the section where the flexible ventilation duct is screwed on are given.

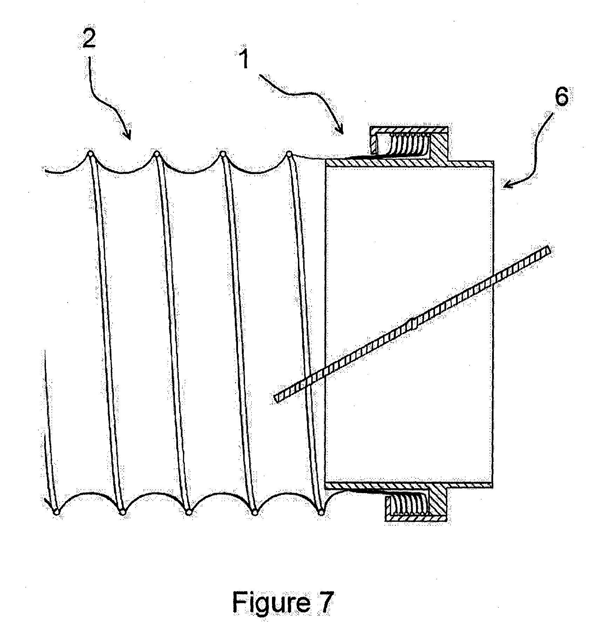

In Figure 7, a cross-sectional view of another configuration of the apparatus fixed on a flexible ventilation duct, which is the subject of the invention, is given.

### REFERENCE NUMBERS

- 1.: Connecting apparatus
- 2.: Flexible ventilation duct
- 3.: Installation protrusion
- 4.: Mounting holes
- 5.: Fastening ring
- 6.: Fan

### Detailed description of the Invention

In Figure 1, the perspective view of the apparatus (1), which is the subject of the invention, located on the edge for connecting the flexible ventilation duct together with a fan (2) to the main ventilation duct is presented. Here the practical connecting apparatus (1) connecting the ventilation duct to the main ventilation duct with a fan may contain an air guide wing in order to maintain the air control. Said mounting apparatus (1) contains a flexible ventilation pipe (2) at a certain distance around it, and a fastening ring (5) as a parallel circular extension. Said fastening ring (5) is fixed by surrounding the said flexible ventilation duct (2). Said duct (2) fastens tightly by fitting easily on the said fastening ring by virtue of the circular grooves and protrusions it contains.

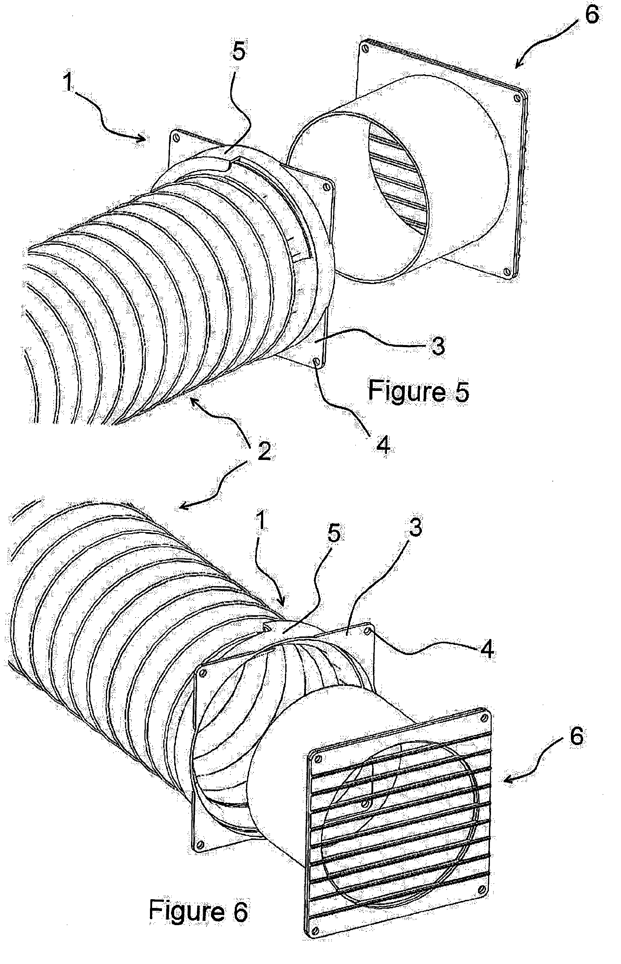

The apparatus (1) which is the subject of the invention contains mounting protrusions (3) of certain length towards the exterior. By virtue of connection means such as screws etc. to be penetrated through the mounting holes (4) generated on the said mounting protrusions (3), it is ensured that a flexible ventilation duct (2) which is fastened rigidly by penetrating through itself is fixed on a connection point. As shown in figures 1, 2, 3, 5 and 6, the mounting protrusions (3) can either have an angular structure extending from the four corners of said apparatus (1) towards the exterior, or can be configured in various polygonal forms such as circular or hexagonal forms. **The important point here is that the flexible ventilation duct (2) is connected practically, rigidly, esthetically and economically at multiple-points to a main ventilation duct (not shown in the figures) or to a connection point preferably by four-point screwing.** Thus the installation of the flexible ventilation duct (2) can be carried out practically without any need for a plastic clamp and tapes.

As can be understood more easily from Figures 1 and 2, it contains a duct inlet protrusion penetrating for a certain length into the flexible duct and also housing the wing which is said to involve to control the air flow in the section between the practical connecting apparatus (1) fastening the flexible ventilation duct (2) and the main ventilation duct or connection point.

The practical connecting apparatus (1) which is the subject of the invention fastens the flexible ventilation duct (2) to the main ventilation duct rigidly with the screws to be penetrated through the said mounting holes (4). **The mounting protrusions (3) generated around the said apparatus (1), besides eliminating the requirement for plastic clamps and tapes used in the previous technique, pave the way for a more resistant and long-lasting installation by enabling a screw mounting by means of the mounting holes (4) it has.**

## Claims

1. Connecting apparatus (1) which practically fixes the flexible ventilation ducts (2) to a main ventilation area or to a connection point without any need for a plastic clamp or tapes
**characterized in**
**that** the said flexible ventilation duct (2) contains one fastening ring (5) by which it fastens tightly by encircling from an end, and
at least one mounting protrusion (3) located towards the exterior of the said fastening ring perpendicular to the center of the said duct, and
at least one mounting hole (4) for fixing the said flexible ventilation duct (2) fastened by the said mounting protrusion (3) to a main duct with a connection means such as a screw.

2. Connecting apparatus (1) according to the claim 1, **characterized in that** the said apparatus serves as a natural gasket between the said apparatus (1) and said flexible ventilation duct (2) and the main duct or the connection point which it is intended to be penetrated through.

3. Connecting apparatus (1) according to any of the preceding claims,
**characterized in**
**that** the said ventilation duct (2) has at least one mounting protrusion (3) which it fastens tightly by encircling from an end, and
**that** the ventilation duct (2) which is fastened by the said mounting protrusion (3) is connected to a main duct by being screwed through the said mounting protrusion (3).

## Patentansprüche

1. Verbindungsvorrichtung (1), die flexible Belüftungskanäle (2) an einem Hauptlüftungsbereich oder an einem Verbindungspunkt ohne Kunststoffklammer oder Bänder praktisch fixiert,
**dadurch gekennzeichnet, dass**
der flexible Belüftungskanal (2) enthält
einen Befestigungsring (5), durch den er an einem Ende dicht umlaufend befestigt ist und
mindestens einen in Richtung der Außenseite des Befestigungsrings senkrecht zum Zentrum des genannten Kanals angeordneten Befestigungsvorsprung (3), und
mindestens ein Befestigungsloch (4) zur Befestigung des durch den Befestigungsvorsprung (3) an einem Hauptkanal fixierten flexiblen Lüftungskanals (2) durch ein Verbindungsmittel, wie beispielsweise eine Schraube.

2. Verbindungsvorrichtung (1) nach Anspruch 1,
**dadurch gekennzeichnet, dass** die Vorrichtung als natürliche Dichtung zwischen der Vorrichtung (1) und dem flexiblen Belüftungskanal (2) und der Hauptleitung oder dem Verbindungspunkt dient, welcher zu durchdringen angestrebt wird.

3. Verbindungsvorrichtung (1) nach einem der vorangegangenen Ansprüche,
**dadurch gekennzeichnet, dass** der Belüftungskanal (2) zumindest einen Befestigungsvorsprung (3) besitzt, welcher an einem Ende dicht umlaufend befestigt ist, und
der Belüftungskanal (2), welcher durch den Befestigungsvorsprung (3) fixiert ist, mit der Hauptleitung durch Verschrauben durch die Befestigungsvorsprung (3) hindurch verbunden ist.

## Revendications

1. Dispositif de liaison (1) qui fixe de façon pratique des canaux de ventilation flexibles (2) sur une zone de ventilation principale ou sur un point de liaison, et ceci sans attaches en matière plastique ou rubans,
**caractérisé en ce que**
le canal de ventilation flexible (2) comporte
un anneau de fixation (5) par lequel il est fixé avec étanchéité périphérique à une extrémité, et
au moins une saillie de fixation (3) agencée en direction de la face extérieure de l'anneau de fixation perpendiculairement au centre dudit canal, et
au moins un trou de fixation (4) destiné à fixer par un moyen de liaison, tel que par exemple une vis, le canal de ventilation flexible (2), fixé sur un canal principal par la saillie de fixation (3).

2. Dispositif de liaison (1) selon la revendication 1,
**caractérisé en ce que** le dispositif sert de joint d'étanchéité naturel entre le dispositif (1) et le canal de ventilation flexible (2) et le conduit principal ou le point de liaison qui doit être traversé.

3. Dispositif de liaison (1) selon l'une des revendications précédentes, **caractérisé en ce que** le canal de ventilation (2) possède au moins une saillie de fixation (3) qui est fixée avec étanchéité périphérique à une extrémité, et
le canal de ventilation (2) qui est fixé par la saillie de fixation (3) est relié au conduit principal par vissage à travers la saillie de fixation (3).
